(19) Europäisches Patentamt

European Patent Office

Office européen des brevets

(11) **EP 0 972 849 A1**

(12) **EUROPEAN PATENT APPLICATION**
published in accordance with Art. 158(3) EPC

(43) Date of publication:
**19.01.2000 Bulletin 2000/03**

(51) Int. Cl.$^7$: **C22B 7/02**

(21) Application number: **97904635.6**

(86) International application number:
**PCT/JP97/00534**

(22) Date of filing: **25.02.1997**

(87) International publication number:
**WO 97/32048 (04.09.1997 Gazette 1997/38)**

(84) Designated Contracting States:
**DE ES FR IT**

(30) Priority: **29.02.1996 JP 4339396**

(71) Applicants:
• **NIPPON STEEL CORPORATION**
  **Tokyo 100-71 (JP)**
• **SANYO SPECIAL STEEL CO., LTD.**
  **Himeji-shi Hyogo-ken 672 (JP)**

(72) Inventors:
• **KOTANI, Seiichi,**
  **Nippon Steel Corporation**
  **Tokyo 100-71 (JP)**

• **MORIDERA, Hiromitsu,**
  **Nippon Steel Corporation**
  **Tokyo 100-71 (JP)**
• **SHIGEZUMI, Tadayoshi,**
  **Sanyo Special Steel Co.,Ltd.**
  **Shikama-ku, Himeji-shi, Hyogo 672 (JP)**

(74) Representative:
**VOSSIUS & PARTNER**
**Siebertstrasse 4**
**81675 München (DE)**

(54) **METHOD AND APPARATUS FOR TREATING IRONMAKING DUST**

(57)    An object of the present invention is to separate and recover iron and nonferrous metals, such as zinc, contained in iron-and steel-making dust, by mixing the dust with charcoal material and conducting reduction processing in an externally heated-type rotary furnace. Dust and charcoal material are mixed with each other at a ratio of 1 : 0.05 to 0.3, and this mixture and reducing gas, which contains hydrogen or carbon monoxide, are charged into an externally heated-type rotary furnace. Iron and nonferrous metals, such as zinc, contained in iron-and steel-making dust are reduced by reducing gas in the furnace, so that zinc is volatilized and separated from solid substance. Water vapor and carbon dioxide, which are generated simultaneously at this time, react with charcoal material, so that they can be changed into hydrogen and carbon monoxide. Therefore, the furnace can contain a highly reducing atmosphere.

Fig.3

EP 0 972 849 A1

## Description

FIELD OF THE INVENTION

The present invention relates to recycling of iron-and steel-making dust generated in the iron-and steel-making industry. More particularly, the present invention relates to a method of processing and an apparatus used for the processing in which an externally heated-type rotary furnace is used and a reducing volatilizing reaction of zinc is facilitated when the externally heated-type rotary furnace contains a highly reducing atmosphere.

BACKGROUND OF THE INVENTION

In the iron-and steel-industry, various types of dust such as blast furnace dust generated from blast furnaces, converter dust generated from converters and electric furnace dust generated from electric furnaces are generated. The primary component of the dust is iron oxide, which can be recycled in the process of iron-and steel-making. However, the above dust generated in the process of iron-and steel-making contains not only iron but also non-ferrous metals such as zinc. Therefore, in order to recycle the dust generated in the process of iron-and steel-making, it is necessary to separate iron and non-ferrous metal from each other and recover them.

As disclosed in Japanese Unexamined Patent Publication (Kokai) No. 58-141345, dust generated in the process of iron-and steel-making, which contains non-ferrous metal components, is conventionally processed as follows. When the dust is heat-treated in an internally heated-type rotary furnace at 1000 to 1400°C together with charcoal material such as coal or coke, non-ferrous metal components such as zinc are reduced, volatilized and removed from the dust, and the volatile components are oxidized again on the delivery side of the furnace. After that, the components are recovered by a bag filter in the form of oxide.

When processing is conducted in the internally heated-type rotary furnace, although it is a heat treatment furnace, the object of which is to conduct a reducing reaction in it, a highly reducing atmosphere can be obtained only in a portion of high temperature in the furnace. In other portions in the furnace, only a weakly reducing atmosphere is provided in which a reducing reaction is conducted only from $Fe_2O_3$ to $Fe_3O_4$ and FeO. As a result, residence time of dust generated in the process of iron-and steel-making becomes long, and the size of the apparatus of the internally heated-type rotary furnace is increased, and further the equipment cost and the maintenance expense are high. In order to decrease the size of the apparatus, it is necessary to keep a highly reducing atmosphere in the entire furnace so that the reduction of dust can be facilitated, and especially, the reducing volatilizing reaction of zinc can be facilitated.

Although the exhaust gas of the internally heated-type rotary furnace contains CO at a ratio of about 10%, it is burned and discharged because its calorific value is low. It is also necessary to effectively utilize the above exhaust gases such as CO without burning and discharging.

SUMMARY OF THE INVENTION

The characteristics of the present invention will be described as follows. Then dust generated in the process of iron-and steel-making is reduced in an externally heated-type rotary furnace, the inside of which is kept in a reducing atmosphere of $H_2$ and/or CO, charcoal material is previously mixed with the dust and charged into the externally heated-type rotary furnace, and $H_2O$ and/or $CO_2$ generated in the process of reducing the dust is reduced by the action of the charcoal material. Therefore, a quantity of reducing gas supplied to the externally heated-type rotary furnace can be decreased, and a highly reducing atmosphere can be easily kept in the furnace.

In order to accomplish the above objects, the present invention is summarized as follows.

(1) A method for processing iron-and steel-making dust in which reducing gas is supplied to an externally heated-type rotary furnace so as to reduce the iron-and steel-making dust and also reduce and volatilize zinc in the dust, the method comprising the steps of: mixing the dust and charcoal material with each other; and charging the mixed dust and charcoal material into the externally heated-type rotary furnace so as to reduce the dust and to volatilize and remove zinc from the dust.

(2) A method for processing iron-and steel-making dust according to the above item (1), wherein after the dust and charcoal material nave been mixed with each other, they are pelletized into spherical pellets, the diameter of which is 2 to 15 mm.

(3) A method for processing iron-and steel-making dust according to the above item (1), wherein after the dust has been pelletized, it is mixed and crushed with charcoal material into spherical pellets, the diameter of which is 2 to 15 mm.

(4) A method for processing iron-and steel-making dust according to the above item (1), wherein after dust has been collected from exhaust gas of an externally heated-type rotary furnace, the exhaust gas is recycled as a reducing gas.

(5) A method for processing iron-and steel-making dust according to the above item (1), wherein charcoal material is composed of coke and/or non-caking coal or slightly-caking coal.

(6) An apparatus for processing iron-and steel-making dust in which the dust is reduced when reducing gas is supplied into an externally heated-type rotary furnace and zinc contained in the dust is reduced and volatilized, comprising: a pelletizer for pelletizing the dust; and a mixer for mixing the pelletized dust with charcoal material, wherein the pelletizer and the mixer are arranged in the front stage of the externally heated-type rotary furnace.

(7) An apparatus for processing iron-and steel-making dust in which the dust is reduced when a reducing gas is supplied into an externally heated-type rotary furnace and zinc contained in the dust is reduced and volatilized, comprising: a crushing and mixing machine for crushing and mixing the dust and charcoal material; and a pelletizer for pelletizing the crushed and mixed dust, wherein the crushing and mixing machine and the pelletizer are arranged in the front stage of the externally heated-type rotary furnace.

(8) An apparatus for processing iron-and steel-making dust according to the above item (6) or (7), further comprising a separating and recovering device for separating and recovering iron and charcoal material from the discharge so that they can be recycled.

(9) An apparatus for processing iron-and steel-making dust according to the above item (6) or (7), further comprising a gas purifier for recycling exhaust gas after zinc has been recovered from the exhaust gas.

BRIEF DESCRIPTION OF THE DRAWINGS

Fig. 1 is a flowchart showing a process of pelletizing and mixing of charcoal material according to the present invention.

Fig. 2 is a flowchart showing a process of crushing, mixing and pelletizing of charcoal material according to the present invention.

Fig. 3 is a graph showing a relationship between a dezincing ratio and a processing temperature of the reducing condition 1 of the present invention.

Fig. 4 is a graph showing a relationship between a dezincing ratio and a processing temperature of the reducing condition 2 of the present invention.

Fig. 5 is a schematic illustration showing an outline of the pelletizing and mixing process of charcoal material of the present invention.

Fig. 6 is a schematic illustration showing an outline of the crushing, mixing and pelletizing process of charcoal material of the present invention.

BEST MODE FOR CARRYING OUT THE INVENTION

In the present invention, an externally heated-type rotary furnace is used for keeping the entire furnace in a highly reducing atmosphere. A sealing property of the externally heated-type rotary furnace is high, and the heat source and gas source are completely separated from each other in the externally heated-type rotary furnace. For the above reasons, unlike an internally heated-type furnace, it is unnecessary to supply the atmosphere or oxygen gas into the externally heated-type rotary furnace. Therefore, it is easy to keep the entire externally heated-type rotary furnace in a highly reducing atmosphere.

The atmosphere gas in the externally heated-type rotary furnace is a reducing gas containing $H_2$ and/or CO at 20 to 100%. When the concentration of $H_2$ and/or CO is lower than 20%, it requires a period of time not less than 2.0 hr at 900°C when not less than 90% of iron oxide and zinc oxide is reduced. Therefore, a concentration of $H_2$ and/or CO of lower than 20% is not effective. The higher the concentration of $H_2$ and/or CO is, the more the reducing reaction can be facilitated.

Concerning the type of gas, $H_2$ can conduct a reducing reaction faster than CO. Concerning the gas to be used actually, it is preferable to use coke oven gas (around $H_2$: 60%, CO: 2%) generated in the iron-and steel-works, converter gas (around $H_2$: 1%, CO: 70%) and partially burned gas of hydrocarbon produced by an easy process (around $H_2$: 50%, CO: 30%).

The furnace temperature is controlled in a range from 700 to 1000°C. When the furnace temperature is not higher than 700°C, the reducing reaction of iron oxide is conducted extremely slowly. Therefore, it is not preferable that the furnace temperature is not higher than 700°C. When the furnace temperature is not lower than 1000°C, the durability of reaction tubes, which are usually made of stainless steel SUS310S or its equivalent, of the externally heated-type rotary furnace is extremely poor. Therefore, it is impossible to conduct operation at temperature not lower than 1000°C. In order to make the reduction and volatilization in the furnace advance smoothly, it is preferable that the furnace temperature is controlled in a range from 900 to 1000°C.

Concerning the reaction conducted in the furnace, $H_2$ and/or CO, which is a reducing gas, reacts with iron oxide and zinc oxide to generate metallic iron and metallic zinc according to the following reaction formulas (1) and (2). Since the volatility of metallic zinc is high, the solid components are volatilized, so that iron and zinc are separated from each other. When lead and cadmium are contained in the iron-and steel-making dust, these metals behave in the substantially same manner as zinc. Therefore, they are reduced and volatilized in the furnace according to the following reaction formulas (3) and (4). In this way, they are removed from the solid.

$$Fe_2O_3 + 3(H_2 \text{ and/or CO}) \rightarrow 2Fe + 3(H_2 \text{ and/or CO}_2) \tag{1}$$

$$ZnO + (H_2 \text{ and/or CO}) \rightarrow Zn(g) + (H_2O \text{ and/or CO}_2) \tag{2}$$

$$PbO + (H_2 \text{ and/or CO}) \rightarrow Pb(g) + (H_2O \text{ and/or CO}_2) \tag{3}$$

$$CdO + (H_2 \text{ and/or CO}) \rightarrow Cd(g) + (H_2O \text{ and/or CO}_2) \tag{4}$$

However, $H_2O$ and/or $CO_2$, which is an oxidizing gas, is generated in the above reaction. The above oxidizing gas $H_2O$ and/or $CO_2$ reacts with a reduced metal, which has been generated, and obstructs the above reducing reaction. For the above reasons, in order to make the above reducing reaction advance smoothly, it is necessary to remove residual $H_2O$ and/or $CO_2$, which is an oxidizing gas, from the furnace. Then the above gas $H_2O$ and/or $CO_2$ is removed from the furnace only by means of supplying gas, it is necessary to supply a large quantity of atmosphere gas, that is, it is necessary to supply atmosphere gas, the quantity of which is not less than 10,000 $Nm^3$/t-dust.

In the present invention, in order to remove the influence of the effect of the above oxidizing gas, charcoal material is charged into the furnace together with the iron-and steel-making dust. In the furnace, the above reducing reaction occurs, and $H_2O$ and/or $CO_2$, which is an oxidizing gas, reacts with the carbon contained in the charcoal material in accordance with the following formulas (5) and (6). Due to the reaction, $H_2O$ and/or $CO_2$ is reduced, so that $H_2$ and/or CO is produced. Therefore, the atmosphere in the furnace is kept as a highly reducing atmosphere, the composition of which is substantially the same as that of the charged gas.

$$C + H_2O \rightarrow H_2 + CO \tag{5}$$

$$C + CO_2 \rightarrow 2CO \tag{6}$$

Charcoal material is commonly used as a reducing agent. In the case of an internally heated-type rotary furnace, in order to enhance the utilization of charcoal material as a reducing agent, a concentration of CO in the exhaust gas of the internally heated-type rotary furnace is around 10%. Due to the foregoing, a calorific value of the exhaust gas discharged from the internally heated-type rotary furnace is low. Therefore, the exhaust gas of low calorific value is not effectively used as a reducing gas or a heat source and is burned and discharged.

On the other hand, in the present invention, charcoal material is used for reproducing the atmosphere gas in the furnace. As a result, it is possible to keep the supplied reducing gas in a condition of a highly reducing atmosphere without supplying a large quantity of reducing gas. Therefore, after dust has been collected from the produced gas exhausted from the furnace, the gas is used as a reducing gas or a heat source.

Non-caking coal or slightly-caking coal and/or coke is used as charcoal material to be mixed with iron-and steel-making dust. When highly caking coal is used, the following problems may be encountered. A portion of caking coal is liquidized in the process of heat treatment. Therefore, $H_2$ or CO, which is a reducing gas in the above reducing reaction, is obstructed from coming into contact with metal oxide contained in the iron-and steel-making dust, and further the volatilization of a metal such as zinc is obstructed.

Characteristics of using non-caking or slightly caking coal and coke will be described as follows. In the case of using non-caking or slightly caking coal, a large quantity of hydrogen and methane, which are generated in the process of heating, are contained as compared with the case of using coke, and the volatilizing components act as a reducing agent. Therefore, the reduction of iron and zinc contained in the dust is facilitated. Therefore, the unit requirement of the reducing gas can be decreased. On the other hand, in the case of using coke, the carbon content of coke is higher than that of coal, and the ash content of coke is lower than that of coal. Therefore, coke is effective to respectively enhance the concentration of iron contained in the solid discharge and the concentration of zinc contained in the recovered dust. Therefore, the value of the recovered substance can be enhanced. When non-caking or slightly caking coal and coke are selected, charcoal material is determined while consideration is given to the values of reducing gas and a recovered substance.

A mixing ratio of the dust and charcoal material is determined to be a weight ratio of dust : charcoal material = 1 : 0.05 to 0.3. When the mixing ratio of charcoal macerial is lower than 0.05, the following problems may be encountered. $H_2O$ and/or $CO_2$ generated in the process of reducing reaction seldom comes into contact with carbon contained in charcoal material. Therefore, the reproducing reaction of $H_2$ and/or CO is slow, and further a quantity of carbon is not sufficient with respect to a quantity of $H_2O$ and/or $CO_2$ generated in the process of reducing reaction. Accordingly, $H_2O$ and/or $CO_2$ remains in the furnace, and the reducing reaction is suppressed. When the mixing ratio of charcoal material exceeds 0.3, a sufficiently large quantity of carbon exists in the furnace. Therefore, the effect of facilitating the reaction of reproducing $H_2$ and CO by increasing a quantity of carbon cannot be expected, that is, the added carbon is uselessly wasted. For the above reasons, it is preferable that the mixing ratio of charcoal material to be charged into the furnace is determined at 0.15 to 0.25. When the mixing ratio of charcoal material exceeds 0.2, there is a possibility that charcoal material, which has not reacted yet, remains in the solid substance discharged from the externally heated-type rotary furnace. However, the solid substance is charged into a melting furnace so that it can be used as a source or iron. Therefore, the remaining charcoal material can be effectively consumed as a heat source for the melting furnace.

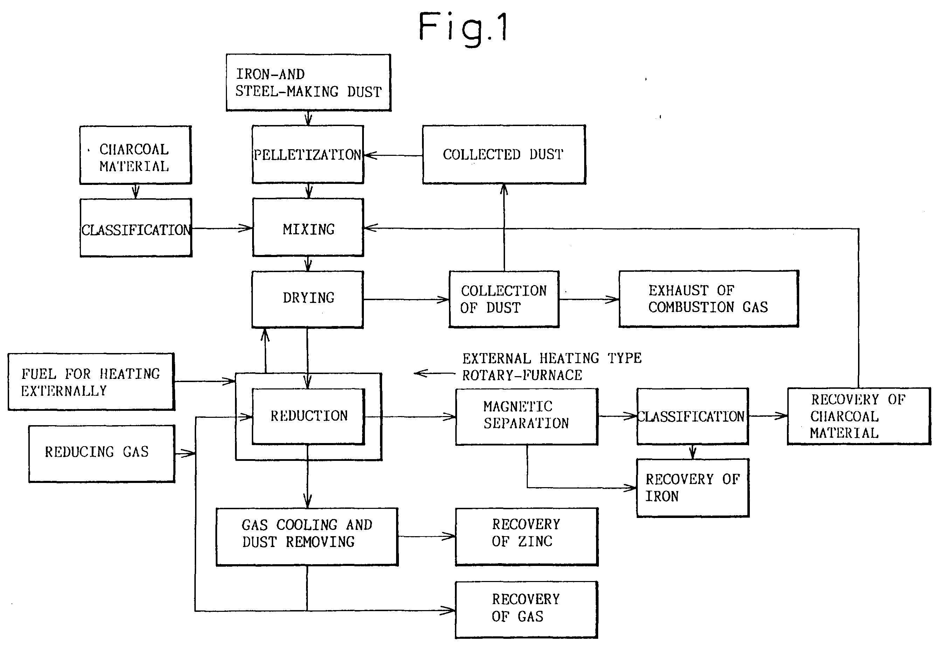

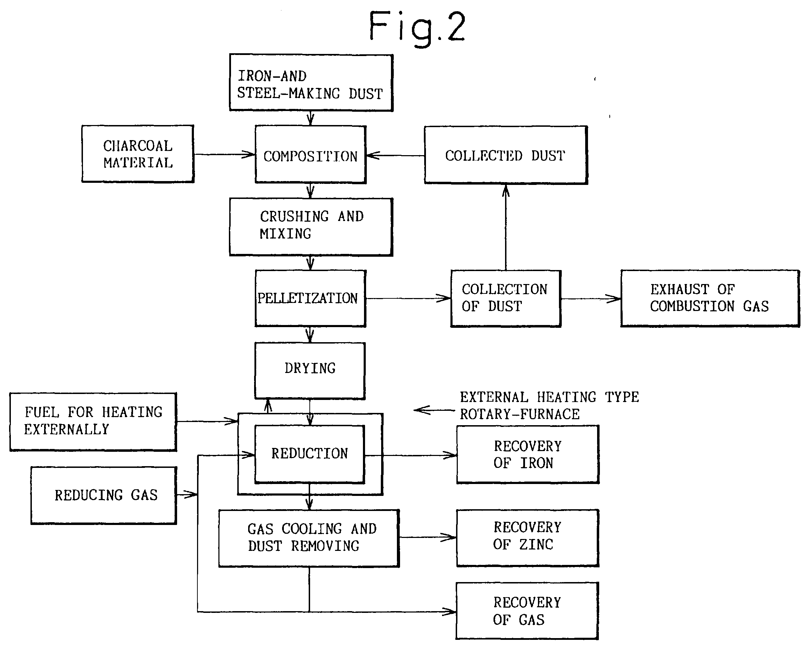

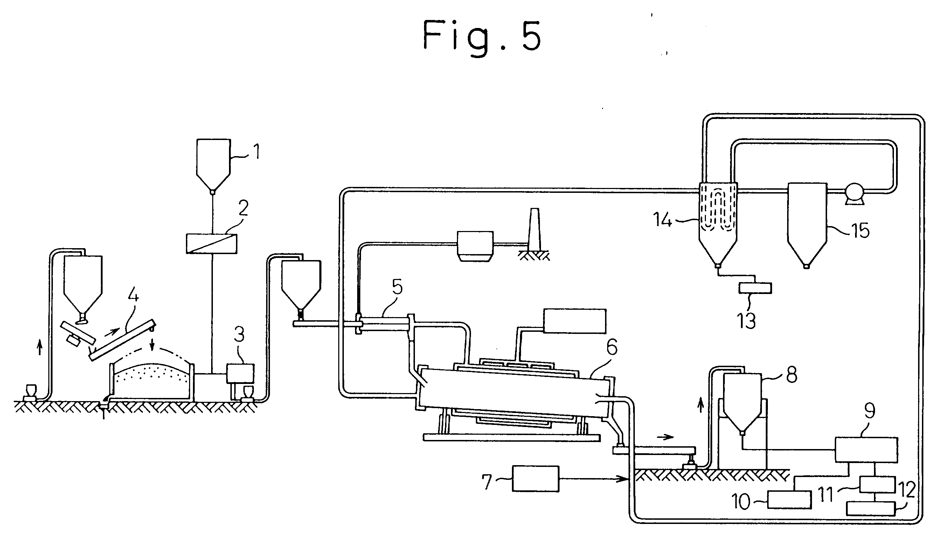

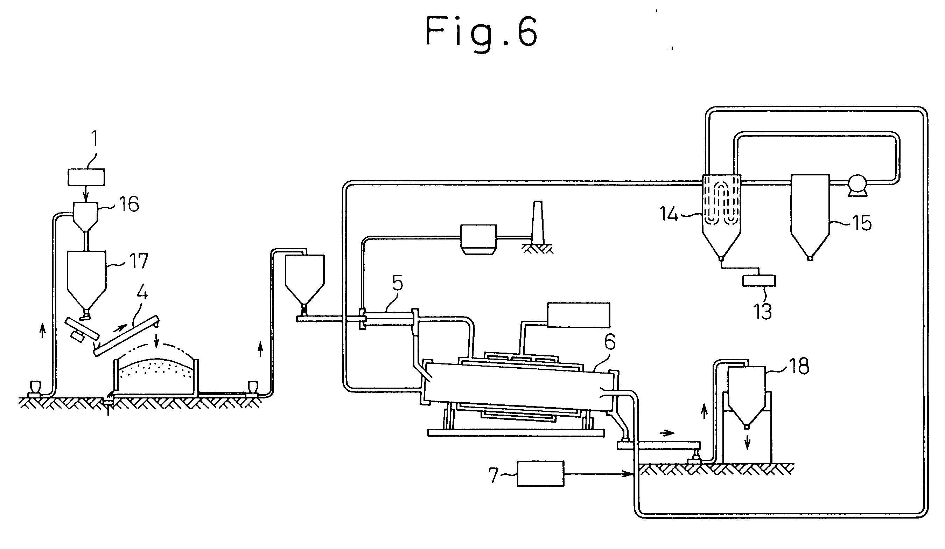

Concerning the production of the mixture of dust and charcoal material, the following two methods are provided. One method is shown in Figs. 1 and 5 in which pelletized dust and classified charcoal material are mixed with each other. Charcoal material 1 is classified by the classification screen 2 and mixed by the mixer 3 with dust which has been pelletized by the pelletizer 4. The thus mixed dust and charcoal material are made to pass through the dust drier 5 and supplied to the externally heated-type rotary furnace 6. Reducing gas 7 is supplied into the furnace 6 from the opposite side to the raw material, that is, reducing gas 7 is supplied into the furnace 6 as a counterflow. Reduced dust is sent to the iron and charcoal material hopper 8 and then sent to the magnetic separator 9 so that iron 10 can be recovered. In this case, charcoal material is classified (11) and recovered. The other method is shown in Figs. 2 and 6 in which dust and charcoal material 12 are crushed and mixed, and the thus crushed and mixed substance is pelletized. Charcoal material 1 and dust are supplied to the blending machine 16. Then charcoal material 1 and dust are mixed and crushed into powder by the crushing and mixing machine 17 and then pelletized by the pelletizer 4. In the recovering process conducted after reduction, recovering is conducted under the condition that iron and charcoal material 18 are mixed with each other. In the method in which dust and charcoal material are crushed, mixed and pelletized, a grain size of powder before pelletization is kept to be not more than 0.5 mm so that the mechanical strength of the obtained pellets can be sufficiently high. In either method, the diameter of pellets is adjusted to be 2 to 15 mm.

When the diameter of pellets is smaller than 2.0 mm, a large quantity of powder is generated from the pellets in the furnace, and the thus generated powder adheres onto the furnace wall, which causes a problem when the processed material is conveyed. Therefore, the diameter of pellets smaller than 2.0 mm is not preferable. When the diameter of pellets exceeds 15 mm, since the aforementioned reducing reaction and carbon gas reaction are gas-solid reactions, diffusion of gas in the pellets is restricted by a reaction rate determining process. Therefore, it is impossible to ensure a sufficiently high reaction rate. Therefore, the diameter of pellets exceeding 15 mm is not preferable. It is preferable that the diameter of pellets is arranged in a range from 5 to 10 mm.

Water in the mixture obstructs a reducing reaction conducted in the externally heated-type rotary furnace. Therefore, it is preferable that the mixture is dried as completely as possible. However, in order to dry the mixture completely, a large quantity of heat and a long period of time are required. Therefore, a percentage of water content in the mixture is kept to be a value not higher than 5 wt% at which the reducing reaction is not affected.

The above two forms of mixing dust with charcoal material have the following characteristics.

Concerning the reaction of carbon, it is preferable to use a method in which dust and charcoal material are crushed, mixed and pelletized. Compared with a method in which pelletized dust and classified charcoal material are mixed, the method in which dust and charcoal material are crushed, mixed and pelletized is effective to decrease the unit consumption amount of carbon, that is, it is possible to provide a sufficiently high effect at a lower ratio of blending charcoal material.

On the other hand, concerning the production of the mixture, it is simple to adopt a method in which only dust is pelletized. Concerning the mechanical strength of pellets, the mechanical strength of pellets made of only dust is higher than the mechanical strength of pellets made of dust and charcoal material.

In the above process, the solid discharged from the externally heated-type rotary furnace is utilized as an iron source and, concerning the exhaust gas containing metallic volatile components, after dust has been collected, the exhaust gas is recycled as an atmosphere gas in the furnace, and zinc is recovered from the collected dust.

When the reducing gas and the iron-and steel-making dust are charged into the externally heated-type rotary furnace, it is preferable that they are charged in the form of a counterflow. Both end portions of the externally heated-type rotary furnace are not heated from the outside. Therefore, temperatures of both end portions of the externally heated-type rotary furnace are lower than the furnace temperature at the heated section, that is, temperatures of both end portions of the externally heated-type rotary furnace are not higher than 700°C. For the above reasons, when the reducing gas and dust are charged into the furnace in the form of a parallel flow, a portion of zinc gas, which has been reduced and volatilized in the heating section of the furnace, is oxidized again in the low temperature section on the delivery side of the furnace and precipitated as a solid of zinc oxide. As a result, iron and zinc can not be completely separated from each other. In the case of a counterflow, a current of zinc gas which has been reduced and volatilized in the furnace and a current of the reduced dust are opposite to each other. Accordingly, no zinc gas flows onto the solid delivery side. For the above reasons, even if a portion of zinc gas is oxidized again on the gas discharge side and precipitated in the form of solid zinc oxide, it is reduced again in the heating section of the furnace together with the charged dust. Then it is directed to the gas discharge side in the form of zinc gas. Accordingly, iron and zinc can be completely separated from each other.

Gas discharged from the externally heated-type rotary furnace contains hydrogen gas and carbon monoxide which have not been reacted. Accordingly, a calorific value of gas discharged from the externally heated-type rotary furnace is high. Concerning the collected subject which has been collected from the exhaust gas of the externally heated-type rotary furnace, a portion of zinc is oxidized again when the exhaust gas is cooled, and a mixture of metallic zinc and zinc oxide is precipitated. Therefore, zinc can be recovered as an excellent nonferrous smelting raw material which contains zinc at a ratio not lower than 60%.

EXAMPLES

EXAMPLE 1

In this example, the reduction facilitating effect is investigated for various types of charcoal materials. In this example, an externally heated-type rotary furnace was used, and reduction was conducted on dust generated by an electric furnace which is one type of iron-and steel-making dust. Dust generated by an electric furnace contains around 50 wt% of $Fe_2O_3$ and around 25 wt% of $ZnO$, and the residue is composed of $Al_2O_3$, $PbO$ and so forth.

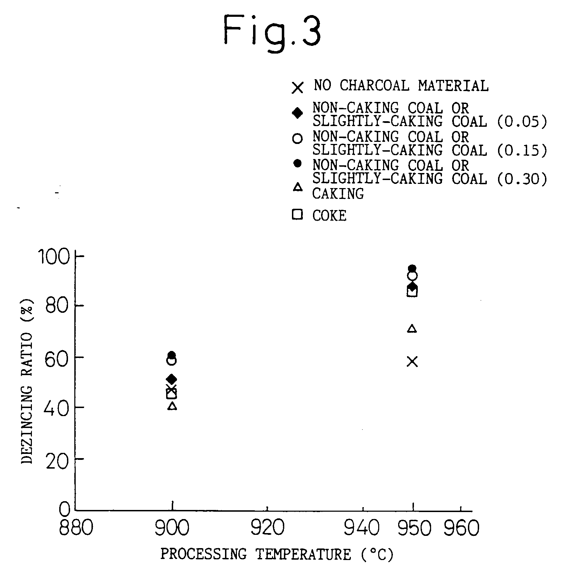

Under the reducing condition 1 shown in Table 1, after the dust generated by an electric furnace had been pelletized, it was mixed with classified charcoal material, and then the dust was reduced. A dezincing ratio with respect to the type of charcoal material is shown on the graph of Fig. 3.

Table 1

| Substance to be processed | Pellets made of electric furnace dust (Grain size 2.8 - 6.70 mm, Fe: 30 wt%, Zn: 20 wt% containing) |
|---|---|
| Type of charcoal material | Non-caking or slightly-caking coal, coke, caking coal, nothing (Grain size of either material is 2.8 to 6.70 mm) |
| Form of addition of charcoal material | Mixture of pellets made of electric furnace dust with pellets of charcoal material |
| Addition ratio of charcoal material | dust : charcoal material = 1 : 0.15 (In the case of non-caking or slightly-caking coal, the ratio is set to dust : charcoal material = 1 : 0.05, 0.15, 0.30) |
| Charged atmosphere gas | hydrogen 50% + nitrogen 50% quantity of mixed gas to be supplied : 1.0 $Nm^3$/kg-dust |
| Heat treatment temperature | Temperature of substance to be processed in furnace 900, 950°C |
| Heat treatment time | 60 min |

That is, electric furnace dust was pelletized into pellets, the diameter of which was 2.8 to 6.7 mm. Then the pellets were respectively mixed with caking coal, non-caking or slightly-caking coal and coke which were crushed and classified to the size of 2.8 to 6.7 mm. After that, reducing gas composed of 50% of hydrogen and 50% of nitrogen was supplied by a ratio of 1.0 $Nm^3$/kg-dust, and reduction processing was conducted for 60 minutes at 900 and 950°C. Charcoal material was added to dust by a weight ratio of 1 : 0.15, however, non-caking or slightly-caking coal was added to dust at 1 : (0.05, 0.15, 0.30), that is, the ratio was changed in three stages. As a comparative example, after electric furnace dust had been pelletized under the same condition as that described above, reduction processing was conducted without adding charcoal material. In the case where reduction processing was conducted at 900°C, the following results were provided. When no charcoal material was added, the dezincing ratio was 47.1%. On the other hand, when caking coal was added, the dezincing ratio was 40.5%, and when coke was added, the dezincing ratio was 45.5%, that is, the dezincing ratio was lowered. However, when non-caking or slightly-caking coal was added at 1 : 0.05, the dezincing ratio was 50.5%, and when non-caking or slightly-caking coal was added by 1 : 0.15, the dezincing ratio was 58.3%, and when non-caking or slightly-caking coal was added at 1 : 0.30, the dezincing ratio was 60.5%, that is, the dezincing ratio was enhanced. In the case where reduction processing was conducted at 950°C, the following results were provided. When no charcoal material was added, a dezincing ratio was 58.3%. On the other hand, when caking coal was added, a dezincing ratio was 71.2%, and when coke was added, the dezincing ratio was 85.8%. When non-caking or slightly-caking coal was added at 1 : 0.05, the dezincing ratio was 87.7%, and when non-caking or slightly-caking coal was added by 0.15, the dezincing ratio was 92.0%, and when non-caking or slightly-caking coal was added by 1 : 0.30, the dezincing ratio was 93.0%, that is, the dezincing ratio was remarkably enhanced when coke and non-caking or slightly-caking coal were added.

When the composition of charged gas was ($H_2$ = 50.0%, $N_2$ = 50.0%) and reduction processing was conducted in the reducing condition (1), the composition of exhaust gas was ($H_2$ = 48.8%, $N_2$ = 50.8%, $CO$ = 0.4%), that is, exhaust gas was reproduced by adding charcoal material, and it is possible to recycle the exhaust gas.

EXAMPLE 2

This example aims at investigating the effect of facilitating reduction with respect to the form of mixing charcoal material. In this example, the following two cases were investigated. One case is described as follows. As shown on Table 2, as the reducing condition 2, electric furnace dust of Example 1 was used, and dust generated in the process of making iron and steel was pelletized in the process shown in Fig. 1, and after the pellets had been mixed with charcoal material, reduction processing was conducted. The other case is described as follows. After dust generated in the process of making iron and steel had been mixed with charcoal material and pelletization was conducted in the process shown in Fig. 2, reduction processing was conducted.

Table 2

| Substance to be processed | ① Pellets made of electric furnace dust (containing no charcoal material) |
| | ② Pellets made of electric furnace dust + classified charcoal material (non-crushed mixture) |
| | ③ Pellets of dust containing charcoal material (crushed mixture) |
| Charcoal material (ratio of composition) | Non-caking or slightly-caking coal (dust : charcoal material = 1 : 0.15) |
| Charged atmosphere gas | hydrogen 50% + nitrogen 50% quantity of supply of mixed gas : 1.1 $Nm^3$/kg-dust |
| Heat treatment temperature | Temperature of substance to be processed at furnace temperature of 900°C, 950°C |
| Heat treatment time | 40 min |

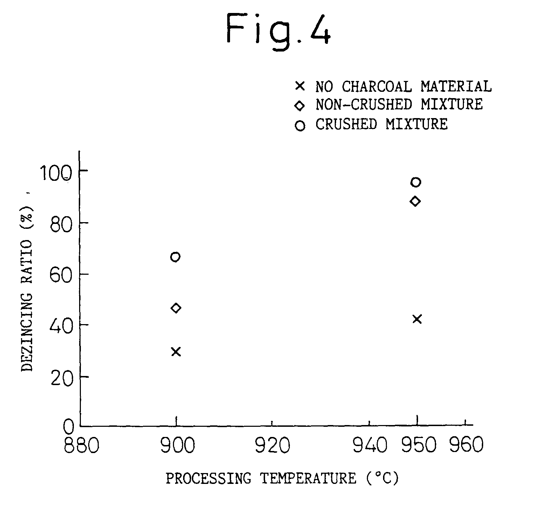

In this case, non-caking or slightly-caking coal was used as charcoal material, and a ratio of added charcoal material with respect to electric furnace dust was 0.15. Electric furnace dust, or electric furnace dust and charcoal material were pelletized into pellets, the diameter of which was 4.75 to 6.70 mm, and reducing gas composed of hydrogen 50% and nitrogen 50% was supplied at a rate of 1.0 $Nm^3$/kg-dust, and then reduction processing was conducted for 40 minutes at 900, 950°C. As a result, the dezincing ratio shown in Fig. 4 was obtained.

In the case where reduction processing was conducted at 900°C, after iron-and steel-making dust had been pelletized in the process shown in Fig. 1, the pellets were mixed with charcoal material and reduced. In this case, the ratio of dezincing was 46.0%. On the other hand, iron-and steel-making dust and charcoal material were mixed and crushed in the process shown in Fig. 2 and then pelletized. When the thus obtained pellets were reduced, the ratio of dezincing was 67.0%. In the case where no charcoal material was added, the ratio of dezincing was 29.6%.

In the case where reduction processing was conducted at 950°C, after iron-and steel-making dust had been pelletized in the process shown in Fig. 1, the pellets were mixed with charcoal material and reduced. In this case, the ratio of dezincing was 87.2%. On the other hand, iron-and steel-making dust and charcoal material were mixed and crushed in the process shown in Fig. 2 and then pelletized. When the thus obtained pellets were reduced, the ratio of dezincing was 95.2%. In the case where no charcoal material was added, the ratio of dezincing was 42.1%.

According to the above results, the following can be concluded. The reducing reaction rate of the process shown in Fig. 2 is higher than that of the process shown in Fig. 1. Therefore, it is possible for the process shown in Fig. 2 to provide a target dezincing ratio at a lower temperature and in a shorter period of time. Consequently, in the case where the target dezincing ratio is not lower than 80 to 90%, it is necessary to select the process shown in Fig. 2 so that the burden imposed on reduction processing can be lightened. In the case where the target dezincing ratio is 60 to 80%, the burden imposed on reduction processing is light. Therefore, it is advantageous to select the process shown in Fig. 1 because it is possible to simplify the pelletizing process when the process shown in Fig. 1 is selected.

INDUSTRIAL APPLICABILITY

According to the present invention, it is possible to greatly reduce the processing time and make the reducing device compact as compared with a case in which the dust processing is conducted in the internally heated-type rotary furnace of the conventional method. Further, according to the present invention, the ratio of dezincing is high. Therefore, the zinc content of the recovered dust is high, and the recovered dust can be utilized as nonferrous smelting raw material.

**Claims**

1. A method for processing iron-and steel-making dust in which reducing gas is supplied to an externally heated-type rotary furnace so as to reduce the iron-and steel-making dust and also reduce and volatilize zinc in the dust, the method comprising the steps of: mixing the dust and charcoal material with each other; and charging the mixed dust and charcoal material into the externally heated-type rotary furnace so as to reduce the dust and to volatilize and remove zinc from the dust.

2. A method for processing iron-and steel-making dust according to claim 1 wherein, after the dust and charcoal material have been mixed with each other, they are pelletized into spherical pellets, the diameter of which is 2 to 15 mm.

3. A method for processing iron-and steel-making dust according to claim 1 wherein, after the dust has been pelletized, it is mixed and crushed with charcoal material into spherical pellets, the diameter of which is 2 to 15 mm.

4. A method for processing iron-and steel-making dust according to claim 1 wherein, after dust has been collected from exhaust gas of an externally heated-type rotary furnace, the exhaust gas is recycled as reducing gas.

5. A method for processing iron-and steel-making dust according to claim 1 wherein charcoal material is composed of coke and/or non-caking coal or slightly-caking coal.

6. An apparatus for processing iron-and steel-making dust in which the dust is reduced when reducing gas is supplied into an externally heated-type rotary furnace and zinc contained in the dust is reduced and volatilized, comprising: a pelletizer for pelletizing the dust; and a mixer for mixing the pelletized dust with charcoal material, wherein the pelletizer and the mixer are arranged in front of the externally heated-type rotary furnace.

7. An apparatus for processing iron-and steel-making dust in which the dust is reduced when reducing gas is supplied into an externally heated-type rotary furnace and zinc contained in the dust is reduced and volatilized, comprising: a crushing and mixing machine for crushing and mixing the dust and charcoal material; and a pelletizer for pelletizing the crushed and mixed dust, wherein the crushing and mixing machine and the pelletizer are arranged in the front stage of the externally heated-type rotary furnace.

8. An apparatus for processing iron-and steel-making dust according to claim 6 or 7, further comprising a separating and recovering device for separating and recovering iron and charcoal material from the discharge so that they can be recycled.

9. An apparatus for processing iron-and steel-making dust according to claim 6 or 7, further comprising a gas purifier for recycling exhaust gas after zinc has been recovered from the exhaust gas.

# Fig.1

IRON-AND STEEL-MAKING DUST

CHARCOAL MATERIAL

CLASSIFICATION

COLLECTED DUST

PELLETIZATION

MIXING

DRYING

EXHAUST OF COMBUSTION GAS

COLLECTION OF DUST

EXTERNAL HEATING TYPE ROTARY-FURNACE

RECOVERY OF CHARCOAL MATERIAL

CLASSIFICATION

RECOVERY OF IRON

MAGNETIC SEPARATION

REDUCTION

GAS COOLING AND DUST REMOVING

RECOVERY OF ZINC

RECOVERY OF GAS

FUEL FOR HEATING EXTERNALLY

REDUCING GAS

# Fig.2

IRON-AND STEEL-MAKING DUST

CHARCOAL MATERIAL → COMPOSITION ← COLLECTED DUST

CRUSHING AND MIXING

PELLETIZATION → COLLECTION OF DUST → EXHAUST OF COMBUSTION GAS

DRYING

FUEL FOR HEATING EXTERNALLY

EXTERNAL HEATING TYPE ROTARY-FURNACE

REDUCTION → RECOVERY OF IRON

REDUCING GAS

GAS COOLING AND DUST REMOVING → RECOVERY OF ZINC

RECOVERY OF GAS

EP 0 972 849 A1

# Fig.3

X NO CHARCOAL MATERIAL

◆ NON-CAKING COAL OR
  SLIGHTLY-CAKING COAL (0.05)

O NON-CAKING COAL OR
  SLIGHTLY-CAKING COAL (0.15)

● NON-CAKING COAL OR
  SLIGHTLY-CAKING COAL (0.30)

△ CAKING

□ COKE

# Fig.4

✕ NO CHARCOAL MATERIAL
◇ NON-CRUSHED MIXTURE
○ CRUSHED MIXTURE

Fig. 5

# Fig.6

EP 0 972 849 A1

# INTERNATIONAL SEARCH REPORT

| | International application No. |
|---|---|
| | PCT/JP97/00534 |

| A. CLASSIFICATION OF SUBJECT MATTER |
|---|
| Int. Cl$^6$ C22B7/02 |
| According to International Patent Classification (IPC) or to both national classification and IPC |

| B. FIELDS SEARCHED |
|---|
| Minimum documentation searched (classification system followed by classification symbols) |
| Int. Cl$^6$ C22B7/02 |

Documentation searched other than minimum documentation to the extent that such documents are included in the fields searched

| | | |
|---|---|---|
| Jitsuyo Shinan Koho | 1926 – 1997 | Jitsuyo Shinan Toroku |
| Kokai Jitsuyo Shinan Koho | 1971 – 1997 | Koho 1996 – 1997 |
| Toroku Jitsuyo Shinan Koho | 1994 – 1997 | |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| PY | JP, 8-193227, A (Nippon Steel Corp.), July 30, 1996 (30. 07. 96), Page 2, claim; Fig. 1 (Family: none) | 1 – 9 |
| A | JP, 7-118768, A (Nippon Steel Corp.), May 9, 1995 (09. 05. 95), Page 2, column 3, line 28 to column 4, line 5, column 4, lines 24 to 33; Fig. 1 (Family: none) | 1 – 9 |
| A | JP, 7-11354, A (Sumitomo Metal Mining Co., Ltd.), January 13, 1995 (13. 01. 95), Page 2, claim; page 2, column 1, lines 31 to 43 (Family: none) | 2, 3 |

☐ Further documents are listed in the continuation of Box C.     ☐ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| May 20, 1997 (20. 05. 97) | June 10, 1997 (10. 06. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)